# EUROPEAN PATENT APPLICATION

(11) **EP 4 530 637 A1**
(43) Date of publication of application: **02.04.2025**
(21) Application number: 23200937.3
(22) Date of filing: 29.09.2023
(51) Int. Cl.: G01N 35/04

(54) **TRANSPORT DEVICE AND LABORATORY SAMPLE DISTRIBUTION SYSTEM**

(71) Applicant: Roche Diagnostics GmbH, 68305 Mannheim (DE); F. Hoffmann-La Roche AG, 4070 Basel (CH)
(72) Inventor: Sharpe, Nathaniel, Cambridge, MA 02139 (US); Nussbaum, Matthew, Winchester, MA 01890 (US); Edelmann, Matthias, 71636 Ludwigsburg (DE)
(74) Representative: Patentanwälte Ruff, Wilhelm, Beier, Dauster & Partner mbB

(57) **Abstract**

The invention relates to a transport device (1) for a laboratory sample distribution system (30), the transport device (1) comprising a transport surface (2) and an electromagnetic actuation assembly (4), the electromagnetic actuation assembly (4) being adapted to generate a magnetic field at the transport surface (2), the electromagnetic actuation assembly (4) comprising electromagnetic actuators (5) being controllable to generate the magnetic field, an electric control board (6) being adapted to control the electromagnetic actuators (5), and a support structure (7) for supporting the electromagnetic actuators (5) and the electric control board (6), the electromagnetic actuators (5) having first electric connectors (8) and the electric control board (6) having second electric connectors (9), the first and the second electric connectors (8, 9) being complementarily adapted to electrically connect the electromagnetic actuators (5) to the electric control board (6), if the electromagnetic actuation assembly (4) is assembled with its electromagnetic actuators (5) and its electric control board (6) and its support structure (7) being joined in a defined assembly orientation relative to one another, the electromagnetic actuators (5) and the electric control board (6) and the support structure (7) each having positioning portions (10), the positioning portions (10) being complementarily adapted to define the assembly orientation.

## Description

The invention relates to a transport device for a laboratory sample distribution system. Furthermore, the invention relates to such a laboratory sample distribution system.

Laboratory sample distribution systems are typically used within laboratory automation systems providing for a partial or full automation of a laboratory. Such a laboratory automation system can comprise a number of laboratory stations to which samples can be distributed by the laboratory sample distribution system. Typically, such a laboratory sample distribution system is adapted to transport samples to be analyzed to the laboratory stations and away from the laboratory stations. Therein, the laboratory sample distribution system usually comprises a transport device having a transport surface over which laboratory sample container carriers of the laboratory sample distribution system are drivable.

It is an object of the present invention to provide for a transport device and for a laboratory sample distribution system having such a transport device which have improved properties. In particular, incorrect montage of an electromagnetic actuation assembly of the transport device is to be avoided.

This object is solved by the subject-matter of the independent claims. Preferred embodiments are subject-matter of the dependent claims.

A transport device according to the invention is adapted to be used in a laboratory sample distribution system. The transport device comprises a transport surface. Laboratory sample container carriers of the laboratory sample distribution system are drivable over the transport surface, in particular on top of the transport surface. In particular, the laboratory sample container carriers can be horizontally driven over the transport surface. The transport surface can be adapted for carrying the laboratory sample container carriers, in particular with respect to gravity. Each of the laboratory sample container carriers can be adapted for holding a sample container, respectively.

According to the invention, the transport device comprises an electromagnetic actuation assembly. Therein, the electromagnetic actuation assembly is adapted to generate a magnetic field at the transport surface for magnetic drive-interaction with at least one laboratory sample container carrier placed on the transport surface. In other words: Laboratory sample container carriers placed on top of the transport surface can be driven along the transport surface by magnetic drive-interaction resulting from the magnetic field generated by the electromagnetic actuation assembly.

In accordance with the invention, the electromagnetic actuation assembly comprises a number of electromagnetic actuators. The electromagnetic actuation assembly comprises an electric control board. The electric control board is adapted to control the electromagnetic actuators. The electromagnetic actuation assembly has a support structure for supporting the electromagnetic actuators and the electric control board. Both the electromagnetic actuators and the electric control board may be attached to the support structure. The electromagnetic actuators have first electric connectors, and the electric control board has second electric connectors. Therein, the first electric connectors and the second electric connectors are complementarily adapted to electrically connect the electromagnetic actuators to the electric control board, if the electromagnetic actuation assembly is assembled with its electromagnetic actuators and its electric control board and its support structure being joined in a defined assembly orientation relative to one another. In other words: The first electric connectors and the second electric connectors may be arranged and configured complementarily, so that corresponding first electric connectors and second electric connectors only electrically connect if the electromagnetic actuators and the electric control board and the support structure are arranged correctly when joining said components of the electromagnetic actuation assembly.

According to the invention, the electromagnetic actuators and the electric control board and the support structure each have positioning portions. Therein, the positioning portions are complementarily adapted as to define the assembly orientation. Due to the assembly orientation of the electromagnetic actuators and the electric control board and the support structure relative to one another being defined by the positioning portions and due to the first electric connectors and the second electric connectors only electrically connecting in the assembly orientation, error-proof montage of the electromagnetic actuation assembly is achieved. In other words: The positioning portions may avoid attachment of the electromagnetic actuators and the electric control board to the support structure without being in their assembly orientation, correctly, wherein the first electric connectors and the second electric connectors may electrically connect only in the assembly orientation.

According to an embodiment of the invention, the support structure is in between the electromagnetic actuators and the electric control board, in particular with respect to a joining direction of the electromagnetic actuation assembly. The electromagnetic actuators and the electric control board may be attached to the support structure along the joining direction upon montage the electromagnetic actuation assembly.

According to another embodiment of the invention, the positioning portions of the electromagnetic actuators and of the electric control board and of the support structure are adapted to engage with one another, in particular in a positive locking manner, if the electromagnetic actuators and the electric control board and the support structure are joined to one another in their assembly orientation. In particular, the positioning portions are adapted to only engage with one another, if the electromagnetic actuators and the electric control board and the support structure are joined to one another in their assembly orientation. In addition, or as an alternative, the positioning portions of the electromagnetic actuators and of the electric control board and of the support structure are adapted to block joining the electromagnetic actuators and/or the electric control board and/or the support structure to one another, if differing from the assembly orientation. Thus, incorrect montage of the electromagnetic actuation assembly can be avoided, in particular in a poka-yoke-manner.

According to another embodiment of the invention, the electromagnetic actuators each comprise an electromagnetic coil and a coil carrier for carrying the electromagnetic coil. Such an electromagnetic actuator may be particularly compact and/or robust.

According to another embodiment of the invention, the positioning portion of at least one electromagnetic actuator comprises at least two protrusions. The at least two protrusions extend together along the joining direction of the electromagnetic actuation assembly. Therein, the positioning portion of the support structure comprises at least two, in particular at least partially recessed, contours. Each of the contours of the positioning portion of the support structure is adapted to accept one of the protrusions of the positioning portion of the at least one electromagnetic actuator along the joining direction. Therein, the contours are shaped and/or arranged complementarily to the protrusions. In particular, the at least two protrusions and the at least two contours are arranged and/or shaped so that the protrusions are only acceptable in the contours in the assembly orientation of the respective electromagnetic actuator relative to the support structure. In this way, particularly reliable error-proof montage of the at least one electromagnetic actuator and the support structure can be achieved, in particular in a poka-yoke manner.

According to another embodiment of the invention, the positioning portion of at least one electromagnetic actuator comprises a guiding pin. The guiding pin extends along the joining direction of the electromagnetic actuation assembly. Therein, the positioning portions of the support structure and of the electric control board each comprise an opening. The openings, therein, are adapted to accept the guiding pin of the positioning portion of the at least one electromagnetic actuator along the joining direction, if the respective electromagnetic actuator and the electric control board and the support structure are in their assembly orientation. Therein, the guiding pin has a tip. The tip is offset from the first electric connectors of the respective electromagnetic actuator along the joining direction. In particular, the tip is offset from the first electric connectors along the joining direction so that, during assembly, the guiding pin is at least partially accepted by the openings of both the electric control board and the support structure before the first electric connectors of the first respective electromagnetic actuator get in electric contact with the corresponding second electric connectors of the electric control board. Thus, correct electric connection of the respective first electric connectors and the corresponding second electric connectors can be achieved particularly reliably.

According to another embodiment of the invention, the positioning portion of the electromagnetic actuators and/or of the electric control board and/or of the support structure comprises an angled phase and/or a lead-in chamfer. In other words: The positioning portion of at least one of the electromagnetic actuators or of the electric control board or of the support structure may comprise the angled phase and - in addition or as an alternative - the lead-in chamfer. The angled phase and/or the lead-in chamfer can allow for finally bringing the electromagnetic actuators and the electric control board and the support structure to their assembly orientation despite slight misalignment in the beginning of joining.

According to another embodiment of the invention, the electromagnetic actuators and/or the electric control board and/or the support structure have an asymmetric marking for visual detection of their orientation, in particular relative to one another. This may allow for visual recognition of the assembly orientation.

According to another embodiment of the invention, the support structure comprises an iron material or is made from an iron material. In addition, or as an alternative, the support structure comprises a number of core protrusions. Therein, each of the electric actuators has a central hole for accepting one of the core protrusions. The core protrusions and the central holes may aid with positioning the electromagnetic actuators relative to the support structure and/or improve the electromagnetic field to be generated by the electromagnetic actuators.

According to another embodiment of the invention, the transport device comprises a transport surface module. Therein, the transport surface module comprises a sensor board and the transport surface. The sensor board faces the electromagnetic actuation assembly. The transport surface may be arranged opposite the electromagnetic actuation assembly, in particular with respect to gravity. The sensor board is adapted to detect a position of a laboratory sample container carrier placed on and/or driven over the transport surface with respect to the transport device. Furthermore, the transport device comprises a base. The base is adapted to carry both the electromagnetic actuation assembly and the transport surface module. In particular, the base comprises connecting elements, the connecting elements being adapted for connection with another transport device. In addition, or as an alternative, the base may comprise an electric wiring board, the electric wiring board being adapted for connection with another transport device. Transport devices to be connected with one another can be configured, similarly or equally.

A laboratory sample distribution system according to the invention comprises at least one transport device according to the invention as described above. The laboratory sample distribution system furthermore comprises several laboratory sample container carriers which are placeable on the transport surface of the transport device. Each of the laboratory sample container carriers has a magnetically active device for the magnetic drive-interaction with the magnetic field generated by the electromagnetic actuation assembly. The laboratory sample distribution system has a control device. The control device is configured to control the electromagnetic actuation assembly as to control movement of the laboratory sample container carriers over the transport surface. In particular, the control device is configured to control the electromagnetic actuation assembly as to control movement of the laboratory sample container carriers placed on the transport surface. The afore-mentioned advantages of the transport device according to the invention transfer to the laboratory sample distribution system according to the invention having such a transport device.

Preferably, the laboratory sample distribution system has a transport device arrangement of several transport devices connected and/or coupled to one another so that the transport surfaces of said transport devices together form a coherent transport surface. Within the transport device arrangement, the transport devices can be modularly coupled to match the coherent transport surface to a specific distance and/or path spanned in between laboratory stations of the laboratory sample distribution system.

Further advantages and features of the invention arise from the claims as well as from the following description of a preferred embodiment of the invention, which is depicted by the drawings. Therein, equal reference signs relate to equal or similar or functionally equal components.

It is to be understood that the features mentioned above as well as the features described below are not only usable in the stated combination, respectively, but also in other combinations or solely, without leaving the scope of the present invention.
- Fig. 1: schematically depicts, in a perspective view, an embodiment of a laboratory sample distribution system according to the invention, the laboratory sample distribution system having an embodiment of a transport device according to the invention,
- fig. 2: illustrates, in a perspective exploded view, the laboratory sample distribution system of fig. 1,

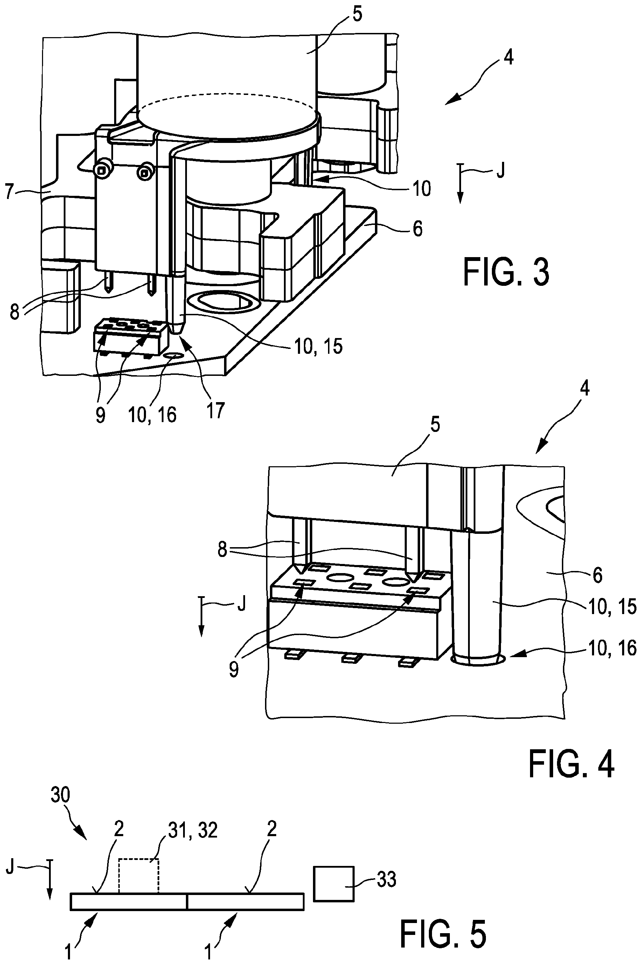

- fig. 3: illustrates, in a perspective view, a detail of an electromagnetic actuation assembly of the transport device of figs. 1 and 2, an electromagnetic actuator of the electromagnetic actuation assembly currently being joined to a support structure of electromagnetic actuation assembly and to an electric control board of the electromagnetic actuation assembly,
- fig. 4: illustrates, in a perspective view, another detail of the electromagnetic actuation assembly of fig. 3, wherein joining the electromagnetic actuator to the support structure and to the electric control board is further proceeded,
- fig. 5: illustrates, in a schematic side view, another embodiment of the laboratory sample distribution system according to the invention having two transport devices according to the invention,
- fig. 6: separately illustrates, in a perspective view, an electromagnetic actuator for the transport device of figs. 1 to 5, and
- fig. 7: separately illustrates, in a top view, a support structure for the transport device of figs. 1 to 5.

A laboratory sample distribution system 30 may be adapted for use in a laboratory automation system. The laboratory sample distribution system 30 is configured to transport samples to be analyzed with the laboratory automation system. The laboratory automation system can have laboratory stations for analyzing samples. The laboratory sample distribution system 30 comprises several sample laboratory container carriers 31. Each laboratory sample container carrier 31 is adapted to carry a sample container. Such a sample container can contain a respective sample. Furthermore, the laboratory sample distribution system 30 comprises a transport device 1 according to the invention.

The transport device 1 comprises a transport surface 2. Laboratory sample container carriers 31 are drivable over the transport surface 2. The transport surface 2 can be adapted to carry the laboratory sample container carriers 31. Accordingly, the laboratory sample container carriers 31 are placeable on the transport surface 2. The transport device 1 has an electromagnetic actuation assembly 4. The electromagnetic actuation assembly 4 is adapted to generate a magnetic field at the transport surface 2 for magnetic drive-interaction with at least one laboratory sample container carrier 31 placed on the transport surface 2. Therein, each of the laboratory sample container carriers 31 has a magnetically active device 32. The magnetically active device 32 is adapted for magnetic drive-interaction with the magnetic field generated by the electromagnetic actuation assembly 4.

The laboratory sample distribution system 30 comprises a control device 33. The control device 33 is configured to control the electromagnetic actuation assembly 4 as to thus control movement of the laboratory sample container carriers 31 placed on the transport surface 2. By controlling the transport device 1, in particular its electromagnetic actuation assembly 4, the laboratory sample container carriers 31 holding sample containers can be moved along the transport surface 2 for the samples contained by said sample containers to be distributed between laboratory stations.

The electromagnetic actuation assembly 4 comprises a number of electromagnetic actuators 5. The electromagnetic actuators 5 may be arranged at a distance relative to one another, horizontally, in particular evenly distributed. The electromagnetic actuators 5 are controllable to generate the magnetic field. The electromagnetic actuators 5 may be arranged in lines and columns, said lines and columns extending horizontally and perpendicular to one another.

The electromagnetic actuation assembly 4 has an electric control board 6. The electric control board 6 is adapted to control the electromagnetic actuators 5.

The electromagnetic actuation assembly 4 has a support structure 7 for supporting the electromagnetic actuators 5 and the electric control board 6. The electromagnetic actuators 5 and the electric control board 6 may be attached to the support structure 7. The support structure 7 may have a grid-shaped body from which the core protrusions 21 extend along the joining direction J.

Each of the electromagnetic actuators 5 has first electric connectors 8. The electric control board 6 has second electric connectors 9. Therein, the first electric connectors 8 and the second electric connectors 9 are complementarily adapted to electrically connect the electromagnetic actuators 5 to the electric control board 6, if the electromagnetic actuation assembly 4 is assembled with its electromagnetic actuators 5 and its electric control board 6 and its support structure 7 being joined in a defined assembly orientation relative to one another. Therein, the electromagnetic actuators 5 and the electric control board 6 and the support structure 7 each have positioning portions 10. The positioning portions 10 are complementarily adapted to define the assembly orientation, in particular by mechanical coding.

For example, the support structure 7 is in between the electromagnetic actuators 5 and the electric control board 6. The support structure 7 can be arranged in between the electromagnetic actuators 5 and the electric control board 6 with respect to a joining direction J of the electromagnetic actuation assembly 4. For example, the electric control board 6 can be joined to the support structure 7 against the joining direction J. Contrarily, the electromagnetic actuators 5 can be joined to the support structure 7 in the joining direction J. When operating the transport device 1, the joining direction J may be directed in a direction of gravity.

For example, the positioning portions 10 of the electromagnetic actuators 5 and of the electric control board 6 and of the support structure 7 are adapted to engage with one another, in particular in a positive locking manner. The positioning portions 10 of the electromagnetic actuators 5 and of the electric control board 6 and of the support structure 7 can be adapted to engage with one another if the electromagnetic actuators 5 and the electric control board 6 and the support structure 7 are joined in their assembly orientation. In addition, or as an alternative, the positioning portions 10 of the electromagnetic actuators 5 and of the electric control board 6 and of the support structure 7 are adapted to block joining the electromagnetic actuators 5 and/or the electric control board 6 and/or the support structure 7, if deviating from the assembly orientation. In other words: If any of the electromagnetic actuators 5 or the electric control board 6 or the support structure 7 differs or deviates from the defined assembly orientation, joining said three components together can be blocked by the respective positioning portions 10.

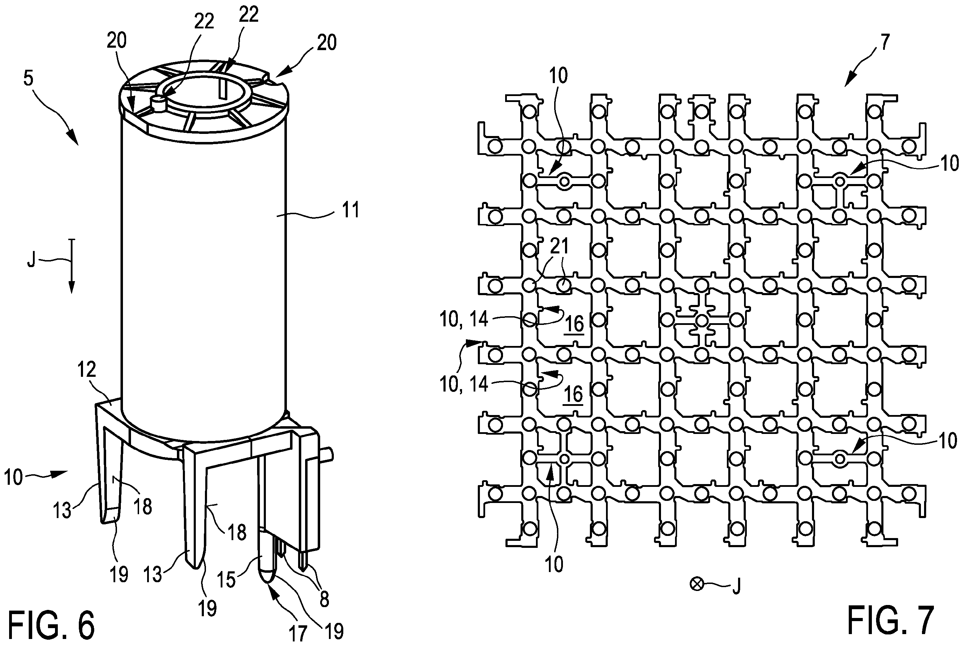

As best to be seen from fig. 6, the electromagnetic actuators 5 may each comprise an electromagnetic coil 11. Each electromagnetic actuator 5 may comprise a coil carrier 12 for carrying the electromagnetic coil 11 of the respective electromagnetic actuator 5. Therein, the positioning portion 10 of the respective electromagnetic actuator 5 may be present at the coil carrier 12 of said electromagnetic actuator 5. Preferably, all electromagnetic actuators 5 are designed similarly or equally.

For example, the positioning portion 10 of at least one electromagnetic actuator 5 comprises at least two protrusions 13. The protrusions 13 commonly or together extend along the joining direction J of the electromagnetic actuation assembly 4. Therein, the positioning portion 10 of the support structure 7 comprises at least two contours 14. Each of these contours 14 is adapted to accept one of the protrusions 13 along the joining direction J. The contours 14 therein are shaped and/or arranged complementarily to the protrusions 13, respectively. For example, the at least two protrusions 13 and the at least two contours 14 are arranged and/or shaped so that the protrusions 13 are only acceptable by the contours 14 in the assembly orientation of the respective electromagnetic actuator 5 relative to the support structure 7.

For example, the positioning portion 10 of at least one electromagnetic actuator 5 comprises a guiding pin 15. The guiding pin 15 extends along the joining direction J of the electromagnetic actuation assembly 4. Therein, the positioning portions 10 of the support structure 7 and of the electric control board 6 each comprise a respective opening 16. The openings 16 of both the support structure 7 and the electric control board 6 are adapted to accept the guiding pin 15 along the joining direction J if the respective electromagnetic actuator 5 and the electric control board 6 and the support structure 7 are in their assembly orientation.

The guiding pin 15 may have a tip 17. Therein, the tip 17 is offset from the first electric connectors 8 of the respective electromagnetic actuator 5 having the guiding pin 15 along the joining direction J. In particular, the tip 17 is offset from the first electric connectors 8 so that, during assembly, the guiding pin 15 is at least partially accepted by the openings 16 of both the electric control board 6 and the support structure 7 before the first electric connectors 8 of the respective electromagnetic actuator 5 get in contact with the corresponding second electric connectors 9 of the electric control board 6.

For example, the positioning portion 10 of at least one or two or all of the electric control board 6 or of the support structure 7 or of the electromagnetic actuators 5 comprises an angled phase 18. In addition, or as an alternative, the positioning portion 10 of at least one or two or all of the support structure 7 or the electric control board 6 or the electromagnetic actuators 5 has a lead-in chamfer 19.

At least one or two or each of the electric control board 6 or the support structure 7 or the electromagnetic actuators 5 may have an asymmetric marking 20 for visual detection of their orientation, in particular relative to one another.

For example, the support structure 7 which is separately depicted in fig. 7 comprises an iron material or is made from an iron material. In addition, or as an alternative, the support structure 7 may comprise a number of core protrusions 21. Therein, each electromagnetic actuator 5 may have a central hole 22. The central holes 22 are adapted to accept a respective one of the core protrusions 21.

For example, the transport device 1 comprises a transport surface module 23. Therein, the transport surface module 23 comprises the transport surface 2 and a sensor board 24. The sensor board 24 faces the electromagnetic actuation assembly 4. The sensor board 24 is adapted to detect a position of a laboratory sample container carrier 31 placed on the transport surface 2 with respect to the transport device 1. The position of a laboratory sample container carrier 31 detected by the sensor board 24 can be fed back to the control device 33 of the laboratory sample distribution system 30.

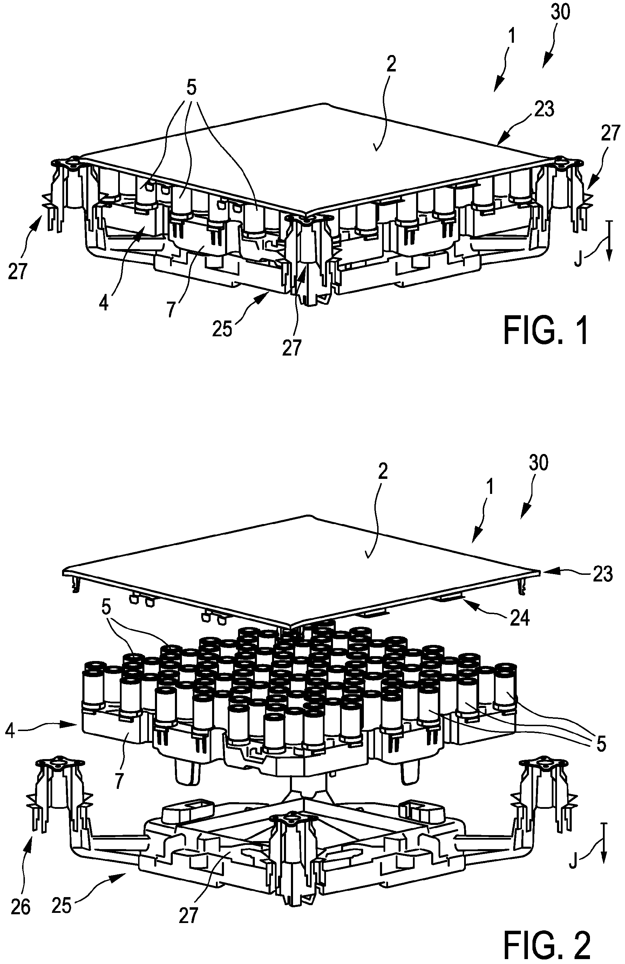

The transport device 1 may comprise a base 25. The base 25 can be adapted to carry both the electromagnetic actuation assembly 4 and the transport surface module 23. As exemplary indicated in figs. 1 and 2, the base 25 may comprise connecting elements 26 which are adapted for connection with another transport device 1. The base 25 may comprise an electric wiring board 27 which is adapted for connection with another transport device 1.

The transport device 1, in particular its transport surface 2 and/or its support structure 7 and/or its electromagnetic actuation assembly 4 and/or its sensor board 24, may have a substantially plate-like or panel-like shape of rectangular, in particular square, circumference. Each of the afore-mentioned components of the transport device 1 may have a circumference of the same type of shape so that said components may be arranged in a stack-like manner when assembling the transport device 1. The circumferences may extend in respective virtual planes, these virtual planes being parallel to one another and perpendicular to gravity.

Therewith, a common and/or coherent transport surface comprising all the transport surfaces 2 of several transport devices 1 attached to one another can be achieved. Therein, the connecting elements 26 can be arranged and shaped such that coupling is only possible in one orientation of the transport devices 1 to be coupled relative to one another. The arrangement and/or shape of the connecting elements 26 can thus realize a poka-yoke principle. Coupled transport devices 1 can form a transport device arrangement. All transport devices 1 of such a transport device arrangement may be controlled by a common and/or shared control device 33.

## Claims

1. Transport device (1) for a laboratory sample distribution system (30), the transport device (1) comprising
- a transport surface (2) over which laboratory sample container carriers (31) of the laboratory sample distribution system (30) are driveable, and
- an electromagnetic actuation assembly (4), the electromagnetic actuation assembly (4) being adapted to generate a magnetic field at the transport surface (2) for magnetic drive-interaction with at least one laboratory sample container carrier (31) placed on the transport surface (2);
- the electromagnetic actuation assembly (4) comprising
- a number of electromagnetic actuators (5) which are controllable to generate the magnetic field,
- an electric control board (6) being adapted to control the electromagnetic actuators (5), and
- a support structure (7) for supporting the electromagnetic actuators (5) and the electric control board (6),
- the electromagnetic actuators (5) having first electric connectors (8) and the electric control board (6) having second electric connectors (9), the first electric connectors (8) and the second electric connectors (9) being complementarily adapted to electrically connect the electromagnetic actuators (5) to the electric control board (6), if the electromagnetic actuation assembly (4) is assembled with its electromagnetic actuators (5) and its electric control board (6) and its support structure (7) being joined in a defined assembly orientation relative to one another,
- the electromagnetic actuators (5) and the electric control board (6) and the support structure (7) each having positioning portions (10), the positioning portions (10) being complementarily adapted to define the assembly orientation.

2. Transport device (1) according to claim 1, **characterized in that**
- the support structure (7) is in between the electromagnetic actuators (5) and the electric control board (6), in particular with respect to a joining direction (J) of the electromagnetic actuation assembly (4).

3. Transport device (1) according to claim 1 or 2, **characterized in that**
- the positioning portions (10) of the electromagnetic actuators (5) and of the electric control board (6) and of the support structure (7) are adapted to engage with one another, if the electromagnetic actuators (5) and the electric control board (6) and the support structure (7) are joined in their assembly orientation; and/or **in that**
- the positioning portions (10) of the electromagnetic actuators (5) and of the electric control board (6) and of the support structure (7) are adapted to block joining the electromagnetic actuators (5) and/or the electric control board (6) and/or the support structure (7), if differing from the assembly orientation.

4. Transport device (1) according to any of the preceding claims, **characterized in that**
- the electromagnetic actuators (5) each comprise an electromagnetic coil (11) and a coil carrier (12) for carrying the electromagnetic coil (11),
- the coil carrier (12) having the positioning portion (10) of the respective electromagnetic actuator (5).

5. Transport device (1) according to any of the preceding claims, **characterized in that**
- the positioning portion (10) of at least one electromagnetic actuator (5) comprises at least two protrusions (13), said protrusions (13) commonly extending along a joining direction (J) of the electromagnetic actuation assembly (4),
- the positioning portion (10) of the support structure (7) comprising at least two contours (14), each of said contours (14) being adapted to accept one of the protrusions (13) along the joining direction (J), said contours (14) being shaped and/or arranged complementarily to the protrusions (13),
- in particular the at least two protrusions (13) and the at least two contours (14) are arranged and/or shaped so that the protrusions (13) are only acceptable in the contours (14) in the assembly orientation of the respective electromagnetic actuator (5) relative to the support structure (7).

6. Transport device (1) according to any of the preceding claims, **characterized in that**
- the positioning portion (10) of at least one electromagnetic actuator (5) comprises a guiding pin (15) extending along a joining direction (J) of the electromagnetic actuation assembly (4),
- the positioning portions (10) of the support structure (7) and of the electric control board (6) each comprising an opening (16), said openings (16) being adapted to accept the guiding pin (15) along the joining direction (J) if the respective electromagnetic actuator (5) and the electric control board (6) and the support structure (7) are in their assembly orientation,
- the guiding pin (15) having a tip (17), the tip (17) being offset from the first electric connectors (8) of the respective electromagnetic actuator (5) along the joining direction (J), in particular so that, during assembly, the guiding pin (15) is at least partially accepted by the openings (16) of both the electric control board (6) and the support structure (7) before the first electric connectors (8) of the respective electromagnetic actuator (5) get in contact with the corresponding second electric connectors (9) of the electric control board (6).

7. Transport device (1) according to any of the preceding claims, **characterized in that** the positioning portion (10) of the electromagnetic actuators (5) and/or of the electric control board (6) and/or of the support structure (7) comprises an angled face (18) and/or a lead-in chamfer (19).

8. Transport device (1) according to any of the preceding claims, **characterized in that**
- the electromagnetic actuators (5) and/or the electric control board (6) and/or the support structure (7) have an asymmetric marking (20) for visual detection of their orientation, in particular relative to one another.

9. Transport device (1) according to any of the preceding claims, **characterized in that**
- the support structure (7) comprises an iron material or is made from an iron material, and/or **in that**
- the support structure (7) comprises a number of core protrusions (21), each electromagnetic actuator (5) having a central hole (22) for accepting one of the core protrusions (21).

10. Transport device (1) according to any of the preceding claims, **characterized in that**
- the transport device (1) comprises a transport surface module (23), the transport surface module (23) comprising a sensor board (24) and the transport surface (2), the sensor board (24) facing the electromagnetic actuation assembly (4) and being adapted to detect a position of a laboratory sample container carrier (31) placed on the transport surface (2) with respect to the transport device (1),
- the transport device (1) comprising a base (25), the base (25) being adapted to carry both the electromagnetic actuation assembly (4) and the transport surface module (23),
- in particular the base (25) comprising connecting elements (26) and/or an electric wiring board (27), the connecting elements (26) and/or the electric wiring board (27) being adapted for connection with another transport device (1).

11. Laboratory sample distribution system (30) comprising
- at least one transport device (1) according to any of the preceding claims,
- several laboratory sample container carriers (31) placeable on the transport surface (2), each of the laboratory sample container carriers (31) having a magnetically active device (32) for the magnetic drive-interaction with the magnetic field generated by the electromagnetic actuation assembly (4), and
- a control device (33) being configured to control the electromagnetic actuation assembly (4) as to control movement of laboratory sample container carriers (31) over the transport surface (2).
